# FASCICULE DE BREVET EUROPEEN

(11) **EP 3 667 306 B1**
(45) Date de publication et mention de la délivrance du brevet: **01.03.2023**
(21) Numéro de dépôt: 19213713.1
(22) Date de dépôt: 05.12.2019
(51) Int. Cl.: G01N 27/407

(54) **SONDE DE MESURE D'UNE PROPRIÉTÉ D'UN GAZ**
SONDE ZUR MESSUNG EINER EIGENSCHAFT EINES GASES
PROBE FOR MEASURING A PROPERTY OF A GAS

(30) Priorité: 11.12.2018 FR 1872712
(43) Date de publication de la demande: 17.06.2020
(73) Titulaire: Renault s.a.s, 92100 Boulogne Billancourt (FR)
(72) Inventeur: BUNOT, Allan, 78730 Saint Arnoult en Yvelines (FR); SAUVAN, Muriel, 91650 Breuillet (FR)
(74) Mandataire: Renault Group

(56) Documents cités:
- DE-A1- 3 211 533
- US-B2- 9 213 014

## Description

La présente invention concerne une sonde de mesure d'une propriété d'un gaz d'un moteur à combustion interne. Elle concerne également un dispositif de mesure comprenant une telle sonde. Elle concerne aussi un moteur à combustion interne comprenant un tel dispositif de mesure ou une telle sonde. Enfin, elle concerne un véhicule automobile comprenant un tel moteur à combustion interne ou un tel dispositif de mesure ou une telle sonde.

Pour fournir des informations sur les propriétés de gaz au sein d'un moteur à combustion interne, on a recours à des capteurs ou sondes.

Par exemple, une sonde de mesure de richesse appelée aussi sonde à oxygène renseigne sur la stoechiométrie du mélange air / carburant à l'admission pour permettre une régulation du moteur. Cette régulation, obtenue par réglage du débit d'air pour un moteur Diesel et du débit de carburant pour un moteur à allumage commandé, est notamment recherchée à des fins d'optimisation de l'efficacité de systèmes de dépollution tels qu'un catalyseur trois voies d'un moteur à allumage commandé. On connaît des sondes à oxygène du type proportionnel ou binaire.

Par exemple, une sonde de NOx donne une information sur un pourcentage d'oxydes d'azote (NOx) contenus dans des gaz d'échappement du moteur. Une telle information permet ensuite d'ajuster une quantité de réducteurs (Adblue - marque déposée) à injecter dans un catalyseur de réduction sélective des oxydes d'azote (catalyseur SCR pour l'expression anglo-saxonne « sélective catalytic réduction »).

Ainsi, les sondes de gaz (sonde de mesure de richesse, sonde de NOx, sonde d'ammoniac, etc...) sont généralement employées selon des stratégies différentes sur les moteurs Diesel ou à allumage commandé. Toutefois la fonction première de la sonde consiste à fournir une information sur une propriété d'un gaz.

Plusieurs technologies, binaires ou proportionnelles, et diverses architectures de sondes existent ce qui génère une grande diversité de sondes. C'est notamment le cas des sondes comprenant un capot permettant de recueillir les gaz du flux incident et comprenant une cage interne contenant un élément sensible qui prend les mesures.

En outre, la réglementation pour moteurs Diesel en termes d'émissions polluantes incite généralement à implanter un capteur d'oxydes d'azote (NOx) sur un pain catalytique de catalyseur de réduction sélective de gros diamètre. Les débits des gaz au niveau de la sonde sont alors faibles ce qui engendre des temps de réponse élevés. De plus, les données provenant du capteur doivent être continûment précises pour que la régulation qui en découle soit la plus réactive possible. Ainsi un temps de réponse élevé d'une sonde n'est pas satisfaisant.

US 9 213 014 B2 décrit un capteur de gaz comprenant une protection comprenant un couvercle interne cylindrique ayant un fond qui recouvre la partie d'extrémité libre d'un élément de mesure, et un couvercle externe cylindrique ayant un fond, qui recouvre le couvercle interne cylindrique. Les deux couvercles possèdent des orifices qui permettent au gaz de mesure de s'écouler de l'extérieur vers l'élément de mesure.

DE 32 11 533 décrit une sonde de mesure d'oxygène comprenant une pièce tubulaire dotée d'une ouverture opposée au flux de sorte que la sonde soit correctement exposée au milieu à tester tout en étant protégée contre les dommages causés par la collision de particules. Le capteur peut être tourner sur son axe principal, ainsi il y a une rotation du capot par rapport à la cage interne.

L'invention a pour objectif de remédier aux inconvénients mentionnés ci-dessus en proposant une solution permettant d'obtenir des mesures rapides, précises et fiables d'une sonde de mesure de propriété d'un gaz quel que soit la taille du conduit au sein duquel elle est installée. L'invention vise aussi à limiter la diversité de telles sondes.

Pour atteindre cet objectif, l'invention porte sur une sonde de mesure d'une propriété d'un gaz pour un moteur à combustion interne selon la revendication 1.

Le passage de la première position à la deuxième position et vice versa, peut se faire par translation et/ou rotation du capot par rapport à la cage interne.

La sonde peut comprendre des moyens d'indexation dans la première position et/ou dans la deuxième position, notamment une encoche ménagée au niveau d'une première base de la cage interne coopérant avec une nervure ménagée au niveau d'une deuxième base du capot ou une encoche ménagée au niveau de la deuxième base du capot coopérant avec une nervure ménagée au niveau de la première base de la cage interne.

La sonde peut comprendre des moyens de maintien en première position, respectivement en deuxième position.

Dans la première position ou dans la deuxième position, au moins un des premiers orifices peut être en vis-à-vis, ou sensiblement en vis-à-vis, d'au moins un des deuxièmes orifices.

En première position, les premiers et deuxièmes orifices peuvent coïncider partiellement, et en deuxième position, les premiers et deuxièmes orifices peuvent coïncider totalement.

La cage interne peut comprendre des troisièmes orifices, notamment répartis sur la première circonférence de la cage interne, de sorte qu'en première position les premiers et deuxièmes orifices peuvent coïncider au moins partiellement, et de sorte qu'en deuxième position les troisièmes et deuxièmes orifices peuvent coïncider au moins partiellement.

Le capot peut comprendre des quatrièmes orifices, notamment répartis sur la deuxième circonférence du capot, de sorte qu'en première position les premiers et deuxièmes orifices peuvent coïncider au moins partiellement, et de sorte qu'en deuxième position les premiers et quatrièmes orifices peuvent coïncider au moins partiellement.

L'élément sensible peut s'étendre suivant un axe principal, notamment perpendiculaire ou sensiblement perpendiculaire à une direction d'écoulement d'un gaz,
la cage interne pouvant être de type capuchon cylindrique ou sensiblement cylindrique ayant un axe confondu ou sensiblement confondu avec l'axe principal,
le capot pouvant être de type capuchon cylindrique ou sensiblement cylindrique ayant un axe confondu ou sensiblement confondu avec l'axe principal,
les première et deuxième circonférences pouvant être dans un même plan ou sensiblement dans un même plan, le plan étant perpendiculaire ou sensiblement perpendiculaire à l'axe principal.

Les premiers orifices peuvent être répartis régulièrement ou sensiblement régulièrement sur la première circonférence et/ou des troisièmes orifices peuvent être répartis régulièrement ou sensiblement régulièrement sur la première circonférence, les deuxièmes orifices pouvant être répartis régulièrement ou sensiblement régulièrement sur la deuxième circonférence et/ou des quatrièmes orifices pouvant être répartis régulièrement ou sensiblement régulièrement sur la deuxième circonférence.

La cage interne peut comprendre un premier orifice axial et/ou le capot peut comprendre un deuxième orifice axial au niveau d'une extrémité distale de l'élément sensible.

L'invention porte encore sur un dispositif de mesure de propriétés de gaz, notamment de gaz d'échappement ou de mélange d'admission d'un moteur à combustion interne, le dispositif comprenant une sonde telle que définie précédemment, des moyens électroniques interprétant les mesures de la sonde et un moyen de transmission d'informations entre la sonde et les moyens électroniques.

L'invention porte encore sur un moteur à combustion interne, notamment un moteur à combustion interne de véhicule automobile, le moteur à combustion interne comprenant une sonde telle que définie précédemment, notamment au sein et/ou au niveau d'une tubulure d'un circuit d'échappement ou d'un circuit d'admission, et/ou un dispositif tel que défini précédemment.

L'invention porte encore sur un véhicule automobile comprenant un moteur à combustion interne tel que défini précédemment et/ou un dispositif de mesure de propriété de gaz tel que défini précédemment et/ou une sonde telle que définie précédemment.

Ces objets, caractéristiques et avantages de la présente invention seront exposés en détail dans la description suivante d'un mode de réalisation d'une sonde fait à titre non-limitatif en relation avec les figures jointes parmi lesquelles :
[Fig. 1] La figure 1 est une vue schématique d'un véhicule automobile selon un mode de réalisation de l'invention.
[Fig. 2] La figure 2 est une vue de face d'une sonde, dépourvue de capot, selon un mode de réalisation de l'invention.
[Fig. 3] La figure 3 est une vue de face d'un capot d'une sonde selon le mode de réalisation de l'invention.
[Fig. 4] La figure 4 est une section d'une deuxième base du capot selon un plan perpendiculaire à l'axe de la sonde selon le mode de réalisation de l'invention.
[Fig. 5] La figure 5 est une section d'une première base d'une cage interne d'une sonde selon un plan perpendiculaire à l'axe de la sonde selon le mode de réalisation de l'invention.
[Fig. 6] La figure 6 est une section d'une première base d'une cage interne d'une sonde selon un plan perpendiculaire à l'axe de la sonde selon une variante du mode de réalisation de l'invention.
[Fig. 7] La figure 7 est une vue de détail d'une première position du capot par rapport à la cage interne de la sonde selon le mode de réalisation de l'invention.
[Fig. 8] La figure 8 est une vue de détail d'une deuxième position du capot par rapport à la cage interne de la sonde selon le mode de réalisation de l'invention.

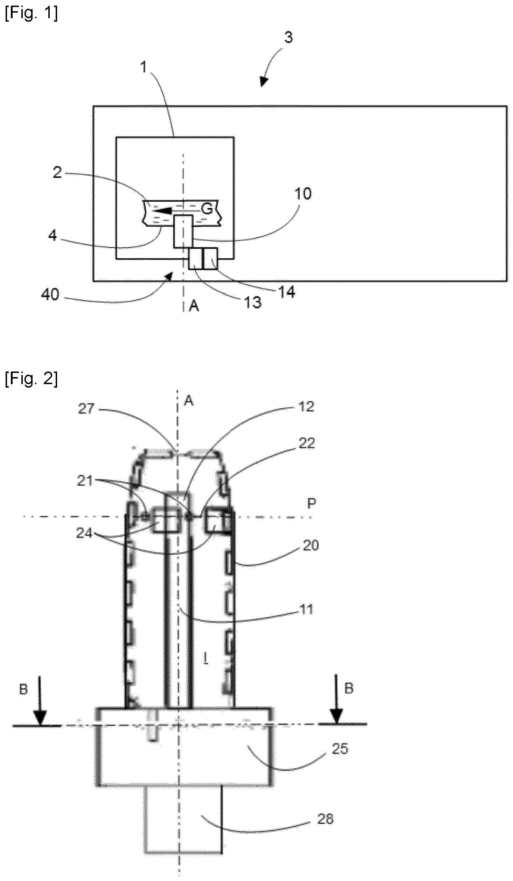

Un véhicule automobile 3 selon un mode de réalisation de l'invention est illustré schématiquement à la figure 1. Le véhicule automobile 3 comprend un moteur à combustion interne 1 selon un mode de réalisation de l'invention. Le moteur à combustion interne 1 comprend une tubulure 4, par exemple d'admission ou d'échappement, au sein de laquelle circulent des gaz 2 selon une direction d'écoulement G. Le moteur à combustion interne 1 comprend encore une sonde 10 selon un mode de réalisation de l'invention.

La sonde 10 mesure au moins une propriété des gaz 2, par exemple une sonde d'oxygène O2 ou de d'oxyde d'azote NOx ou d'ammoniac. De préférence, la sonde 10 s'étend perpendiculairement, ou sensiblement perpendiculairement, à la direction d'écoulement G des gaz 2. Par exemple la sonde 10 s'étend selon un axe principal A.

Le moteur à combustion interne 1 comprend par exemple un dispositif 40 de mesure de propriétés des gaz 2, par exemple des gaz d'échappement ou de mélange d'admission du moteur à combustion interne 1. Le dispositif 40 comprend la sonde 10. Le dispositif 40 de mesure comprend encore des moyens électroniques 14 interprétant les mesures de la sonde 10. Le dispositif 40 comprend encore un moyen 13 de transmission d'informations entre la sonde 10 et les moyens électroniques 14.

La sonde 10 comprend un élément sensible 11. La sonde 10 comprend encore une cage interne 20. Comme illustré sur la figure 2, la cage interne 20 coiffe l'élément sensible 11. La cage interne 20 comprend des premiers orifices 21 d'admission des gaz 2. Par exemple, les premiers orifices 21 sont répartis sur une première circonférence 22 de la cage interne 20. La cage interne 20 délimite un environnement intérieur I au sein de la cage interne 20.

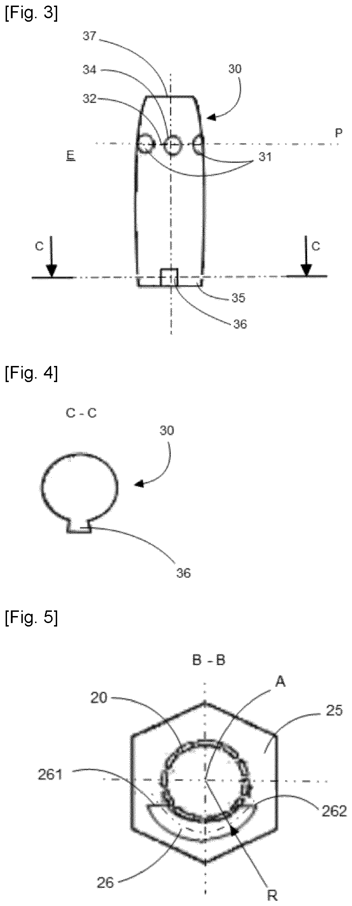

La sonde 10 comprend encore un capot 30. Le capot 30 coiffe la cage interne 20. Comme illustré sur la figure 3, le capot 30 comprend des deuxièmes orifices 31 d'admission de gaz 2. Par exemple, les deuxièmes orifices 31 sont répartis sur une deuxième circonférence 32 du capot 30. Le capot 30 délimite un environnement extérieur E à l'extérieur du capot 30.

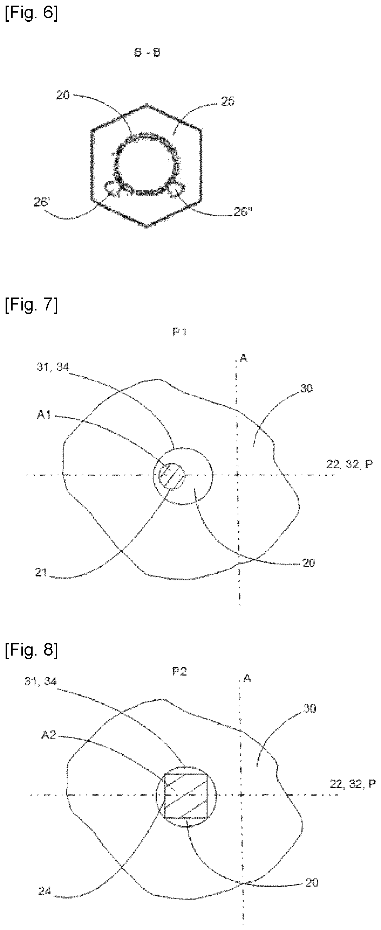

La cage interne 20 et le capot 30 sont agencés l'un par rapport à l'autre de sorte à pouvoir être configurés soit dans une première position P1, soit dans une deuxième position P2. Comme illustré sur les figures 7 et 8, dans la première position P1, une première aire A1 de section de passage de gaz 2 entre l'environnement extérieur E et l'environnement intérieur I est créée. Dans la deuxième position P2, une deuxième aire A2 de section de passage de gaz 2 entre l'environnement extérieur E et l'environnement intérieur I est créée.

La deuxième aire A2 est par exemple supérieure à la première aire A1.

En effet, dans la première position P1 illustrée sur la figure 7, les premiers orifices 21, par exemple de petite surface, de la cage interne 20, coïncident par exemple intégralement avec les deuxièmes orifices 31 et/ou des quatrièmes orifices 34 d'admission des gaz du capot 30. L'aire A1 dépend ici de la surface des premiers orifices 21, la surface des premiers orifices 21 étant par exemple inférieure à la surface des deuxièmes ou quatrièmes orifices 31, 34.

Dans la deuxième position P2 illustrée sur la figure 8, des troisièmes orifices 24 d'admission des gaz 2 de la cage interne 20, par exemple de surface supérieure à la surface des premiers orifices 21, coïncident par exemple intégralement avec les deuxièmes orifices 31 et/ou des quatrièmes orifices 34 du capot 30. L'aire A2 dépend ici de la surface des troisièmes orifices 24, la surface des troisièmes orifices 24 étant par exemple inférieure à la surface des deuxièmes ou quatrièmes orifices 31, 34.

De préférence, la surface d'un orifice du capot 30 destiné à se retrouver en face ou sensiblement en face d'un orifice de la cage interne 20 est supérieure à la surface de cet orifice de la cage interne 20.

Comme il sera précisé plus loin, dans la première position P1 comme dans la deuxième position P2, les orifices de la cage interne 20 ne sont pas forcément en vis-à-vis, c'est-à-dire en face ou sensiblement en face, d'orifices du capot 30.

Avantageusement, les premiers orifices 21 et/ou les deuxièmes orifices 31 et/ou les troisièmes orifices 24 et/ou les quatrièmes orifices 34 peuvent avoir tout type de forme comme par exemple des formes circulaires, carrées, rectangulaires, ovales ou autres. Evidemment les formes et/ou les surfaces de ces orifices sont déterminées de sorte à offrir une capacité de mesure optimale à l'élément sensible 11.

Les premiers et deuxièmes orifices peuvent être de même taille et/ou de même forme. Alternativement, les premiers et deuxièmes orifices peuvent être de tailles différentes et/ou de formes différentes.

Les troisièmes et quatrièmes orifices peuvent être de même taille et/ou de même forme. Alternativement, les troisièmes et quatrièmes orifices peuvent être de tailles différentes et/ou de formes différentes.

Les premiers et quatrièmes orifices peuvent être de même taille et/ou de même forme. Alternativement, les premiers et quatrièmes orifices peuvent être de tailles différentes et/ou de formes différentes.

Les deuxièmes et troisièmes orifices peuvent être de même taille et/ou de même forme. Alternativement, les deuxièmes et troisièmes orifices peuvent être de tailles différentes et/ou de formes différentes.

Le passage de la première position P1 à la deuxième position P2 se fait de préférence par translation et/ou rotation du capot 30 par rapport à la cage interne 20. Le passage de la deuxième position P2 à la première position P1 se fait de préférence par translation et/ou rotation du capot 30 par rapport à la cage interne 20.

Pour faciliter ces passages, la sonde 10 comprend des moyens d'indexation dans la première position P1 et/ou dans la deuxième position P2. Par exemple, comme illustré sur la figure 5, la cage interne 20 comprend une première base 25. La première base 25 est par exemple fixée sur un corps 28 de sonde. Une encoche 26 ou rainure est par exemple ménagée au niveau de la première base 25 de la cage interne 20, de préférence par usinage. Cette encoche 26 peut par exemple présenter sensiblement une portion angulaire d'un anneau de rayon médian R. Par exemple, comme illustré sur la figure 3, le capot 30 comprend une deuxième base 35. Un ergot ou nervure 36 est ménagée par exemple au niveau de la deuxième base 35 comme illustré sur la figure 4.

Ainsi, avantageusement, l'encoche 26 de la cage interne 20 peut recevoir, au moins partiellement, la nervure 36 et coopérer avec la nervure 36 du capot 30. L'encoche 26, illustrée sur la figure 5, peut ainsi offrir deux butées 261, 262 à la nervure 36. Par exemple lorsque la nervure 36 est au contact ou sensiblement au contact de la butée 261, la cage interne 20 et le capot 30 sont agencés en première position P1. Par exemple lorsque la nervure 36 est au contact ou sensiblement au contact de la butée 262, la cage interne 20 et le capot 30 sont agencés en deuxième position P2. A l'inverse, par exemple lorsque la nervure 36 est au contact ou sensiblement au contact de la butée 262, la cage interne 20 et le capot 30 sont agencés en première position P1. Lorsque la nervure 36 est au contact ou sensiblement au contact de la butée 261, la cage interne 20 et le capot 30 sont alors agencés en deuxième position P2. Avantageusement, un moyen de maintien en première position P1 et un moyen de maintien en deuxième position P2 sont prévus afin d'éviter une modification de positionnement de la cage interne 20 par rapport au capot 30. En effet, il convient d'éviter toute modification de positionnement avant montage voire en cours de fonctionnement du moteur à combustion interne et donc de la sonde 10.

Alternativement, voire en complément, une encoche peut être ménagée dans la deuxième base du capot et un ergot peut être ménagé dans la première base de la cage interne.

Comme évoqué précédemment, les passages de la première position P1 à la deuxième position P2 et *vice versa* se font par exemple par translation et/ou rotation du capot 30 par rapport à la cage interne 20. Par exemple, pour changer de position alors que le capot 30 est contre la butée 261, respectivement contre la butée 262, le capot 30 peut être simplement tourné autour de l'axe principal A de sorte à venir au contact de la butée 262, respectivement au contact de la butée 261.

A noter que dans le mode de réalisation illustré l'élément sensible 11 est par exemple fixé sur la première base 25. La première base 25 sert par exemple de moyen de fixation dans et/ou au niveau de la tubulure ou conduit 4. Dans ce cas, la première base 25 a par exemple une forme d'hexagone, par exemple pour former un « six pans » pour pouvoir être fixé aisément par vissage avec une clé.

Selon une variante illustrée sur la figure 6, la première base 25 comprend deux encoches 26', 26". Chaque encoche 26', 26" a de préférence une section, selon un plan perpendiculaire à l'axe principal A de la sonde, de forme similaire à la section de la nervure 36 de la deuxième base 35 selon un plan perpendiculaire à l'axe principal A. Chaque encoche 26', 26" a alors de préférence une section d'aire supérieure à l'aire de la section de la nervure 36. En effet, la nervure 36 s'insère au moins partiellement dans l'une des encoches 26', 26". Par exemple, en première position P1, la nervure 36 coopère avec et/ou dans l'encoche 26' alors qu'en deuxième position P2, la nervure 36 coopère avec et/ou dans l'encoche 26".

A l'inverse, en première position P1, la nervure 36 peut coopérer avec et/ou dans l'encoche 26" alors qu'en deuxième position P2, la nervure 36 peut coopérer avec et/ou dans l'encoche 26'.

Les passages de la première position P1 à la deuxième position P2 et *vice versa* se font par translation et/ou rotation du capot 30 par rapport à la cage interne 20. Par exemple, pour changer de position alors que le capot 30 est au niveau de l'encoche 26', respectivement de l'encoche 26", le capot 30 peut être déplacé suivant l'axe principal A en s'éloignant de l'élément sensible 11, puis tourné autour de l'axe principal A, avant d'être à nouveau déplacé suivant l'axe principal A en direction cette fois de l'élément sensible 11 afin de venir au niveau de l'encoche 26", respectivement de l'encoche 26'.

De préférence la cage interne 20 et/ou le capot 30 et/ou la première base 25 et ou la deuxième base 35 comprennent des moyens de maintien en première position P1, respectivement en deuxième position P2. Ainsi, une fois en première position P1, respectivement en deuxième position P2, le passage vers la deuxième position P2, respectivement vers la première position P1, est difficile voire impossible en particulier une fois la sonde 10 montée sur la tubulure 4.

Concernant le positionnement des orifices, dans la première position P1 ou dans la deuxième position P2, de préférence au moins un des premiers orifices 21 est en vis-à-vis, ou sensiblement en vis-à-vis, d'au moins un des deuxièmes orifices 31.

Par exemple, en première position P1, les premiers et deuxièmes orifices 21, 31 coïncident partiellement alors qu'en deuxième position P2, les premiers et deuxièmes orifices 21, 31 coïncident totalement.

Avantageusement, la cage interne 20 comprend des troisièmes orifices 24, par exemple répartis sur la première circonférence 22 de la cage interne 20 agencés de sorte qu'en première position P1, les premiers et deuxièmes orifices 21, 31 coïncident au moins partiellement, et de sorte qu'en deuxième position P2 les troisièmes et deuxièmes orifices 24, 31 coïncident au moins partiellement.

Avantageusement, le capot 30 comprend des quatrièmes orifices 34, par exemple répartis sur la deuxième circonférence 32 du capot 30, agencés de sorte qu'en première position P1, les premiers et deuxièmes orifices 21, 31 coïncident au moins partiellement, et de sorte qu'en deuxième position P2 les premiers et quatrièmes orifices 21, 34 coïncident au moins partiellement.

De préférence, l'élément sensible 11 s'étend suivant l'axe principal A, par exemple perpendiculaire ou sensiblement perpendiculaire, à la direction d'écoulement G du gaz 2. La cage interne 20 est par exemple de type capuchon cylindrique ou sensiblement cylindrique ayant un axe confondu ou sensiblement confondu avec l'axe principal A. Le capot 30 est par exemple de type capuchon cylindrique ou sensiblement cylindrique ayant un axe confondu ou sensiblement confondu avec l'axe principal A. Les première et deuxième circonférences 22, 32 sont de préférence dans un même plan P, ou sensiblement dans un même plan P, le plan P étant perpendiculaire ou sensiblement perpendiculaire à l'axe principal A.

Dans ce cas, les premiers orifices 21 sont par exemple répartis régulièrement ou sensiblement régulièrement sur la première circonférence 22 et/ou les troisièmes orifices 24 sont par exemple répartis régulièrement ou sensiblement régulièrement sur la première circonférence 22. Les deuxièmes orifices 31 sont par exemple répartis régulièrement ou sensiblement régulièrement sur la deuxième circonférence 32 et/ou les quatrièmes orifices 34 sont répartis régulièrement ou sensiblement régulièrement sur la deuxième circonférence 32.

A noter que la cage interne 20 comprend de préférence un premier orifice axial 27 au niveau d'une extrémité distale 12 de l'élément sensible 11. Alternativement ou en complément, le capot 30 comprend de préférence un deuxième orifice axial 37 au niveau de l'extrémité distale 12 de l'élément sensible 11. De tels orifices axiaux 27, 37 permettent notamment au gaz 2 d'évacuer l'environnement intérieur I et, de manière générale, d'évacuer la sonde 10, en particulier après avoir été au contact de l'élément sensible 11.

En résumé, le capot 30 permet de recueillir les gaz 2 du flux incident, arrivant selon la direction d'écoulement G. Grâce aux deux positions possibles du capot 30 par rapport à la cage interne 20, il est possible de configurer la sonde 10 selon le type de tubulure 4 sur laquelle la sonde 10 est amenée à être agencée.

En cas de tubulure 4 de gros diamètre par exemple, le débit des gaz 2 étant généralement faible, il convient au préalable d'opter pour la position offrant une aire de passage importante depuis l'environnement extérieur E vers l'environnement intérieur I, par exemple la deuxième position P2 et son aire de passage A2. Ainsi, les gaz 2 pénètrent facilement à proximité de l'élément sensible 11 malgré le faible débit. Par exemple, il convient de faire coïncider au maximum des orifices du capot 30 et de la cage interne 20 ayant des grandes surfaces pour avoir un passage facilité. Au final on obtient de grandes sections de passage pour les applications à faible débit.

En cas de tubulure 4 de petit diamètre par exemple, le débit des gaz 2 est généralement davantage élevé. Il convient au préalable d'opter pour la position offrant un passage davantage exigu depuis l'environnement extérieur E vers l'environnement intérieur I, par exemple la première position P1 et son aire de passage A1. Par exemple, il convient de décaler les orifices du capot par rapport à ceux de la cage interne, au moins pour certains orifices, et/ou de faire coïncider des orifices de la cage interne 20 ayant des petites surfaces avec des orifices du capot 30. Au final on obtient de petites sections de passage pour les applications à fort débit.

Ainsi, le temps de réponse de la sonde 10 est diminué, même avec des faibles débits, davantage de gaz 2 pénétrant au sein du capot 30 et ce quel que soit la taille de la tubulure 4. En effet, lorsque la sonde 10 est implantée sur un tuyau ou tubulure de plus faible taille, on choisit la position offrant des trous ou entrées ou orifices de moindre taille ce qui permet de diminuer le risque de pénétration de particules. Comme évoqué précédemment, le capot 30 se positionne par rapport à la cage interne 20 de deux manières distinctes. Cela permet de faire coïncider ou non des orifices du capot 30 avec des orifices de la cage interne 20 de sorte à adapter les trous aux besoins spécifiques, notamment à une tubulure d'un moteur ayant plus ou moins de débit de gaz G. Pour ce faire, il suffit par exemple de faire tourner et/ou translater le capot 30 sur ou par rapport à la cage interne 20, de préférence avant le montage de la sonde 10 sur la tubulure.

Grâce à ce positionnement variable, une seule référence de sonde 10 est suffisante pour au moins deux types de tubulures et/ou deux niveaux de débits. Lors du montage dans le véhicule, on peut choisir la première position P1 ou la deuxième position P2. On peut par conséquent s'adapter au type de débit et/ou au type de tubulure en positionnant une petite aire de passage A1 ou une grande aire de passage A2 par exemple.

Il en résulte un nombre de références de sondes 10 à fabriquer moindre. Evidemment, le nombre de références de sondes 10 à gérer en usine est moindre également.

Ainsi, en cas d'implantation d'une sonde d'oxydes d'azote (NOx) sur un pain catalytique de catalyseur de réduction sélective de gros diamètre, il suffit de configurer la sonde 10 dans la deuxième position P2, les débits des gaz 2 au niveau de la sonde 10 étant faibles. Les temps de réponse sont alors abaissés et les données provenant de la sonde sont continument précises ce qui permet une régulation qui en découle réactive malgré le faible débit de gaz 2. Le temps de réponse est cohérent et permet le réglage du moteur pour assurer la dépollution.

En remarque, la solution atteint donc l'objet recherché d'obtenir des mesures rapides, précises et fiables d'une sonde quelle que soit la taille de la tubulure 4 d'un moteur à combustion interne 1, en particulier pour un véhicule automobile 3, et présente les avantages suivants :
- Elle est facile à mettre en oeuvre et peu onéreuse ;
- Elle peut être utilisée sur tous types de moteur à combustion interne à allumage commandé ou à cycle Diesel, à savoir un moteur à combustion interne de véhicule automobile, de motocyclette, de bateau, d'engin de chantier, d'engin agricole, de pompe ou encore de groupe électrogène.

Bien qu'il ait été décrit une sonde comprenant un capot et une cage interne agencés l'un par rapport à l'autre de sorte à obtenir deux positions distinctes, P1 et P2 par exemple, le capot et/ou la cage interne peuvent permettre davantage de positions l'un par rapport à l'autre, par exemple trois ou davantage encore. Il en résulte alors un gain supérieur en termes de nombre de références de sondes à fabriquer. Alternativement ou en complément, bien qu'il ait été évoqué des premiers, des deuxièmes, des troisièmes et des quatrièmes orifices d'admission de gaz, davantage d'orifices sont envisageables.

Par l'expression « aire de section de passage de gaz entre l'environnement extérieur et l'environnement intérieur », on entend de préférence la somme des aires des intersections des projections des orifices de la cage interne et du capot sur la surface interne de la cage interne, la projection étant réalisée orthogonalement à la surface interne de la cage interne.

Par l'expression « des orifices coïncident partiellement », on entend de préférence que l'aire de la section de passage de gaz entre l'environnement extérieur et l'environnement intérieur est, soit inférieure à la plus petite des deux valeurs qui suivent :
- la somme des aires des projections des orifices de la cage interne sur la surface interne de la cage interne, la projection étant réalisée orthogonalement à la surface interne de la cage interne,
- la somme des aires des projections des orifices du capot sur la surface interne de la cage interne, la projection étant réalisée orthogonalement à la surface interne de la cage interne,
soit que ladite aire est inférieure à 90% de la plus petite de ces deux valeurs.

En outre, les centres des orifices de la cage interne peuvent ne pas être disposés en vis-à-vis des centres des orifices du capot. Ainsi, en cas de cage interne et de capot de type capuchons cylindriques d'axes confondus ou sensiblement confondus avec l'axe principal A de l'élément sensible, les centres des orifices de la cage interne et les centres des orifices du capot peuvent être décalés angulairement autour de l'axe principal A. Autrement encore, les surfaces des orifices de la cage interne peuvent ne pas être disposées en vis-à-vis des surfaces des orifices du capot. Ainsi, en cas de cage interne et de capot de type capuchons cylindriques d'axes confondus ou sensiblement confondus avec l'axe principal A de l'élément sensible, les surfaces des orifices de la cage interne et les surfaces des orifices du capot peuvent être décalées angulairement autour de l'axe principal A.

Par l'expression « des orifices coïncident totalement ou intégralement », on entend de préférence que l'aire de la section de passage de gaz entre l'environnement extérieur et l'environnement intérieur est, soit égale ou sensiblement égale à la plus petite des deux valeurs qui suivent :
- la somme des aires des projections des orifices de la cage interne sur la surface interne de la cage interne, la projection étant réalisée orthogonalement à la surface interne de la cage interne,
- la somme des aires des projections des orifices du capot sur la surface interne de la cage interne, la projection étant réalisée orthogonalement à la surface interne de la cage interne,
soit que ladite aire est supérieure à 90% de la plus petite de ces deux valeurs.

En outre, les centres des orifices de la cage interne peuvent être disposés en vis-à-vis, ou sensiblement en vis-à-vis, des centres des orifices du capot. Ainsi, en cas de cage interne et de capot de type capuchons cylindriques d'axes confondus ou sensiblement confondus avec l'axe principal A de l'élément sensible, les centres des orifices de la cage interne et les centres des orifices du capot peuvent être alignés ou sensiblement alignés radialement par rapport à l'axe principal A.

Par « coiffer », on entend de préférence qu'un élément s'étendant autour d'un axe est, une fois coiffé, au moins partiellement entouré ou recouvert par l'élément coiffant selon toutes les directions radiales par rapport à l'axe et/ou selon la direction axiale à au moins l'une des extrémités.

## Revendications

1. Sonde (10) de mesure d'une propriété d'un gaz (2) pour un moteur à combustion interne (1), notamment un moteur de véhicule automobile (3), la sonde (10) comprenant :
- un élément sensible (11),
- une cage interne (20) coiffant l'élément sensible (11), la cage interne (20) comprenant des premiers orifices (21), notamment répartis sur une première circonférence (22) de la cage interne (20), la cage interne (20) délimitant un environnement intérieur (I) au sein de la cage interne (20),
- un capot (30) coiffant la cage interne (20), le capot (30) comprenant des deuxièmes orifices (31), notamment répartis sur une deuxième circonférence (32) du capot (30), le capot (30) délimitant un environnement extérieur (E) à l'extérieur du capot (30),
**caractérisée en ce que** la cage interne (20) et le capot (30) sont agencés l'un par rapport à l'autre de sorte à pouvoir être configurés :
- dans une première position (P1) dans laquelle une première aire (A1) de section de passage de gaz (2) entre l'environnement extérieur (E) et l'environnement intérieur (I) est créée, la première aire (A1) étant la somme des aires des intersections des projections des premiers orifices (21) de la cage interne (20) et des deuxièmes orifices (31) du capot (30) sur la surface interne de la cage interne (20), la projection étant réalisée orthogonalement à la surface interne de la cage interne (20), ou
- dans une deuxième position (P2) dans laquelle une deuxième aire (A2) de section de passage de gaz (2) entre l'environnement extérieur (E) et l'environnement intérieur (I) est créée, la deuxième aire (A2) étant la somme des aires des intersections des projections des premiers orifices (21) de la cage interne (20) et des deuxièmes orifices (31) du capot (30) sur la surface interne de la cage interne (20), la projection étant réalisée orthogonalement à la surface interne de la cage interne (20), la deuxième aire (A2) étant supérieure à la première aire (A1).

2. Sonde (10) selon la revendication précédente, **caractérisée en ce que** le passage de la première position (P1) à la deuxième position (P2) et vice versa, se fait par translation et/ou rotation du capot (30) par rapport à la cage interne (20).

3. Sonde (10) selon l'une des revendications précédentes, **caractérisée en ce que** la sonde (10) comprend des moyens d'indexation dans la première position (P1) et/ou dans la deuxième position (P2), notamment une encoche (26) ménagée au niveau d'une première base (25) de la cage interne (20) coopérant avec une nervure (36) ménagée au niveau d'une deuxième base (35) du capot (30) ou une encoche ménagée au niveau de la deuxième base (35) du capot (30) coopérant avec une nervure ménagée au niveau de la première base (25) de la cage interne (20).

4. Sonde (10) selon l'une des revendications précédentes, **caractérisée en ce que** la sonde (10) comprend des moyens de maintien en première position (P1), respectivement en deuxième position (P2).

5. Sonde (10) selon l'une des revendications précédentes, **caractérisée en ce que**, dans la première position (P1) ou dans la deuxième position (P2), au moins un des premiers orifices (21) est en vis-à-vis, ou sensiblement en vis-à-vis, d'au moins un des deuxièmes orifices (31).

6. Sonde (10) selon l'une des revendications précédentes, **caractérisée en ce qu'**en première position (P1), les premiers et deuxièmes orifices (21, 31) coïncident partiellement, et **en ce qu'**en deuxième position (P2), les premiers et deuxièmes orifices (21, 31) coïncident totalement.

7. Sonde (10) selon l'une des revendications précédentes, **caractérisée en ce que** la cage interne (20) comprend des troisièmes orifices (24), notamment répartis sur la première circonférence (22) de la cage interne (20), de sorte qu'en première position (P1) les premiers et deuxièmes orifices (21, 31) coïncident au moins partiellement, et de sorte qu'en deuxième position (P2) les troisièmes et deuxièmes orifices (24, 31) coïncident au moins partiellement.

8. Sonde (10) selon l'une des revendications précédentes, **caractérisée en ce que** le capot (30) comprend des quatrièmes orifices (34), notamment répartis sur la deuxième circonférence (32) du capot (30), de sorte qu'en première position (P1) les premiers et deuxièmes orifices (21, 31) coïncident au moins partiellement, et de sorte qu'en deuxième position (P2) les premiers et quatrièmes orifices (21, 34) coïncident au moins partiellement.

9. Sonde (10) selon l'une des revendications précédentes, **caractérisée en ce que** l'élément sensible (11) s'étend suivant un axe principal (A), notamment perpendiculaire ou sensiblement perpendiculaire à une direction d'écoulement (G) d'un gaz (2),
la cage interne (20) étant de type capuchon cylindrique ou sensiblement cylindrique ayant un axe confondu ou sensiblement confondu avec l'axe principal (A),
le capot (30) étant de type capuchon cylindrique ou sensiblement cylindrique ayant un axe confondu ou sensiblement confondu avec l'axe principal (A),
les première et deuxième circonférences (22, 32) étant dans un même plan (P) ou sensiblement dans un même plan (P), le plan (P) étant perpendiculaire ou sensiblement perpendiculaire à l'axe principal (A).

10. Sonde (10) selon la revendication précédente, **caractérisée en ce que** les premiers orifices (21) sont répartis régulièrement ou sensiblement régulièrement sur la première circonférence (22) et/ou des troisièmes orifices (24) sont répartis régulièrement ou sensiblement régulièrement sur la première circonférence (22), les deuxièmes orifices (31) étant répartis régulièrement ou sensiblement régulièrement sur la deuxième circonférence (32) et/ou des quatrièmes orifices (34) sont répartis régulièrement ou sensiblement régulièrement sur la deuxième circonférence (32).

11. Sonde (10) selon l'une des revendications précédentes, **caractérisée en ce que** la cage interne (20) comprend un premier orifice axial (27) et/ou le capot (30) comprend un deuxième orifice axial (37) au niveau d'une extrémité distale (12) de l'élément sensible (11).

12. Dispositif (40) de mesure de propriétés de gaz (2), notamment de gaz (2) d'échappement ou de mélange d'admission d'un moteur à combustion interne (1), **caractérisé en ce que** le dispositif (40) comprend une sonde (10) selon l'une des revendications 1 à 11, des moyens électroniques (14) interprétant les mesures de la sonde (10) et un moyen (13) de transmission d'informations entre la sonde (10) et les moyens électroniques (14).

13. Moteur à combustion interne (1), notamment moteur à combustion interne (1) de véhicule automobile (3), **caractérisé en ce qu'**il comprend une sonde (10) selon l'une des revendications 1 à 11, notamment au sein et/ou au niveau d'une tubulure (4) d'un circuit d'échappement ou d'un circuit d'admission, et/ou un dispositif (40) selon la revendication précédente.

14. Véhicule automobile (3), **caractérisé en ce qu'**il comprend un moteur à combustion interne (1) selon la revendication précédente ou un dispositif (40) de mesure de propriété de gaz (2) selon la revendication 12 ou une sonde (10) selon l'une des revendications 1 à 11.

## Patentansprüche

1. Sonde (10) zur Messung einer Eigenschaft eines Gases (2) für einen Verbrennungsmotor (1), insbesondere einen Kraftfahrzeugmotor (3), wobei die Sonde (10) Folgendes umfasst:
- ein empfindliches Element (11),
- einen Innenkäfig (20), der das empfindliche Element (11) bedeckt, wobei der Innenkäfig (20) erste Öffnungen (21) umfasst, die insbesondere auf einem ersten Umfang (22) des Innenkäfigs (20) verteilt sind, wobei der Innenkäfig (20) eine innere Umgebung (I) innerhalb des Innenkäfigs (20) begrenzt,
- eine Haube (30), die den Innenkäfig (20) bedeckt, wobei die Haube (30) zweite Öffnungen (31) umfasst, die insbesondere auf einem zweiten Umfang (32) der Haube (30) verteilt sind, wobei die Haube (30) eine äußere Umgebung (E) außerhalb der Haube (30) begrenzt, **dadurch gekennzeichnet, dass** der Innenkäfig (20) und die Haube (30) so zueinander angeordnet sind, dass sie wie folgt konfiguriert sein können:
- in einer ersten Position (P1), in der eine erste Fläche (A1) eines Durchtrittsquerschnitts für Gas (2) zwischen der äußeren Umgebung (E) und der inneren Umgebung (I) erzeugt wird, wobei die erste Fläche (A1) die Summe der Flächen der Überschneidungen der Projektionen der ersten Öffnungen (21) des Innenkäfigs (20) und der zweiten Öffnungen (31) der Haube (30) auf der Innenfläche des Innenkäfigs (20) ist, wobei die Projektion orthogonal zur Innenfläche des Innenkäfigs (20) erfolgt, oder
- in einer zweiten Position (P2), in der eine zweite Fläche (A2) eines Durchtrittsquerschnitts für Gas (2) zwischen der äußeren Umgebung (E) und der inneren Umgebung (I) erzeugt wird, wobei die zweite Fläche (A2) die Summe der Flächen der Überschneidungen der Projektionen der ersten Öffnungen (21) des Innenkäfigs (20) und der zweiten Öffnungen (31) der Haube (30) auf der Innenfläche des Innenkäfigs (20) ist, wobei die Projektion orthogonal zur Innenfläche des Innenkäfigs (20) erfolgt, wobei die zweite Fläche (A2) größer als die erste Fläche (A1) ist.

2. Sonde (10) nach dem vorhergehenden Anspruch, **dadurch gekennzeichnet, dass** der Wechsel von der ersten Position (P1) zur zweiten Position (P2) und umgekehrt durch Translation und/oder Rotation der Haube (30) im Verhältnis zum Innenkäfig (20) erfolgt.

3. Sonde (10) nach einem der vorhergehenden Ansprüche, **dadurch gekennzeichnet, dass** die Sonde (10) Mittel zur Indexierung in der ersten Position (P1) und/oder in der zweiten Position (P2) aufweist, insbesondere eine Rille (26), die an einer ersten Grundfläche (25) des Innenkäfigs (20) vorgesehen ist, die mit einer Rippe (36) zusammenwirkt, die an einer zweiten Grundfläche (35) der Haube (30) vorgesehen ist, oder eine Rille, die an der zweiten Grundfläche (35) der Haube (30) vorgesehen ist, die mit einer Rippe zusammenwirkt, die an der ersten Grundfläche (25) des Innenkäfigs (20) vorgesehen ist.

4. Sonde (10) nach einem der vorhergehenden Ansprüche, **dadurch gekennzeichnet, dass** die Sonde (10) Mittel zum Halten in der ersten Position (P1) beziehungsweise in der zweiten Position (P2) umfasst.

5. Sonde (10) nach einem der vorhergehenden Ansprüche, **dadurch gekennzeichnet, dass** sich in der ersten Position (P1) oder in der zweiten Position (P2) wenigstens eine der ersten Öffnungen (21) gegenüber oder im Wesentlichen gegenüber wenigstens einer der zweiten Öffnungen (31) befindet.

6. Sonde (10) nach einem der vorhergehenden Ansprüche, **dadurch gekennzeichnet, dass** sich in der ersten Position (P1) die ersten und zweiten Öffnungen (21, 31) teilweise decken, und dadurch, dass sich in der zweiten Position (P2) die ersten und zweiten Öffnungen (21, 31) vollständig decken.

7. Sonde (10) nach einem der vorhergehenden Ansprüche, **dadurch gekennzeichnet, dass** der Innenkäfig (20) dritte Öffnungen (24) umfasst, die insbesondere auf dem ersten Umfang (22) des Innenkäfigs (20) verteilt sind, so dass sich in der ersten Position (P1) die ersten und zweiten Öffnungen (21, 31) wenigstens teilweise decken, und so dass sich in der zweiten Position (P2) die dritten und zweiten Öffnungen (24, 31) wenigstens teilweise decken.

8. Sonde (10) nach einem der vorhergehenden Ansprüche, **dadurch gekennzeichnet, dass** die Haube (30) vierte Öffnungen (34) umfasst, die insbesondere auf dem zweiten Umfang (32) der Haube (30) verteilt sind, so dass sich in der ersten Position (P1) die ersten und zweiten Öffnungen (21, 31) wenigstens teilweise decken, und so dass sich in der zweiten Position (P2) die ersten und vierten Öffnungen (21, 34) wenigstens teilweise decken.

9. Sonde (10) nach einem der vorhergehenden Ansprüche, **dadurch gekennzeichnet, dass** sich das empfindliche Element (11) entlang einer Hauptachse (A) erstreckt, die insbesondere senkrecht oder im Wesentlichen senkrecht zu einer Strömungsrichtung (G) eines Gases (2) verläuft,
wobei der Innenkäfig (20) vom Typ einer zylindrischen oder im Wesentlichen zylindrischen Kappe ist, die eine Achse aufweist, die mit der Hauptachse (A) zusammenfällt oder im Wesentlichen zusammenfällt,
wobei die Haube (30) vom Typ einer zylindrischen oder im Wesentlichen zylindrischen Kappe ist, die eine Achse aufweist, die mit der Hauptachse (A) zusammenfällt oder im Wesentlichen zusammenfällt,
wobei der erste und zweite Umfang (22, 32) in ein und derselben Ebene (P) oder im Wesentlichen in ein und derselben Ebene (P) liegen, wobei die Ebene (P) senkrecht oder im Wesentlichen senkrecht zur Hauptachse (A) verläuft.

10. Sonde (10) nach dem vorhergehenden Anspruch, **dadurch gekennzeichnet, dass** die ersten Öffnungen (21) regelmäßig oder im Wesentlichen regelmäßig auf dem ersten Umfang (22) verteilt sind und/oder dritte Öffnungen (24) regelmäßig oder im Wesentlichen regelmäßig auf dem ersten Umfang (22) verteilt sind, wobei die zweiten Öffnungen (31) regelmäßig oder im Wesentlichen regelmäßig auf dem zweiten Umfang (32) verteilt sind und/oder vierte Öffnungen (34) regelmäßig oder im Wesentlichen regelmäßig auf dem zweiten Umfang (32) verteilt sind.

11. Sonde (10) nach einem der vorhergehenden Ansprüche, **dadurch gekennzeichnet, dass** der Innenkäfig (20) eine erste axiale Öffnung (27) umfasst und/oder die Haube (30) eine zweite axiale Öffnung (37) an einem distalen Ende (12) des empfindlichen Elements (11) umfasst.

12. Vorrichtung (40) zur Messung von Eigenschaften von Gasen (2), insbesondere Abgasen (2) oder Ansauggemisch-Gasen eines Verbrennungsmotors (1), **dadurch gekennzeichnet, dass** die Vorrichtung (40) eine Sonde (10) nach einem der Ansprüche 1 bis 11, elektronische Mittel (14), die die Messungen der Sonde (10) auswerten, und ein Mittel (13) zur Übertragung von Informationen zwischen der Sonde (10) und den elektronischen Mitteln (14) umfasst.

13. Verbrennungsmotor (1), insbesondere Verbrennungsmotor (1) eines Kraftfahrzeugs (3), **dadurch gekennzeichnet, dass** er eine Sonde (10) nach einem der Ansprüche 1 bis 11, insbesondere innerhalb und/oder an einer Rohrleitung (4) eines Abgas- oder Ansaugtrakts, und/oder eine Vorrichtung (40) nach dem vorhergehenden Anspruch umfasst.

14. Kraftfahrzeug (3), **dadurch gekennzeichnet, dass** es einen Verbrennungsmotor (1) nach dem vorhergehenden Anspruch oder eine Vorrichtung (40) zur Messung von Eigenschaften von Gasen (2) nach Anspruch 12 oder eine Sonde (10) nach einem der Ansprüche 1 bis 11 umfasst.

## Claims

1. Probe (10) for measuring a property of a gas (2) from an internal combustion engine (1), notably a motor vehicle engine (3), the probe (10) comprising:
- a sensitive element (11),
- an internal cage (20) capping the sensitive element (11), the internal cage (20) comprising first orifices (21), notably distributed over a first circumference (22) of the internal cage (20), the internal cage (20) delimiting an interior environment (I) within the internal cage (20),
- a cap (30) capping the internal cage (20), the cap (30) comprising second orifices (31), notably distributed over a second circumference (32) of the cap (30), the cap (30) delimiting an exterior environment (E) on the outside of the cap (30), **characterized in that** the internal cage (20) and the cap (30) are arranged relative to one another in such a way as to be able to be configured:
- in a first position (P1) in which a first cross-sectional area (A1) for the passage for gas (2) between the exterior environment (E) and the interior environment (I) is created, the first area (A1) being the sum of the areas of the intersections of the projections of the first orifices (21) of the internal cage (20) and of the second orifices (31) of the cap (30) onto the internal surface of the internal cage (20), the projection being done orthogonal to the internal surface of the internal cage (20), or
- in a second position (P2) in which a second cross-sectional area (A2) for the passage of gas (2) between the exterior environment (E) and the interior environment (I) is created, the second area (A2) being the sum of the areas of the intersections of the projections of the first orifices (21) of the internal cage (20) and of the second orifices (31) of the cap (30) onto the internal surface of the internal cage (20), the projection being done orthogonal to the internal surface of the internal cage (20), the second area (A2) being greater than the first area (A1).

2. Probe (10) according to the preceding claim, **characterized in that** the transition from the first position (P1) to the second position (P2) and vice versa is achieved by a translational and/or rotational movement of the cap (30) relative to the internal cage (20).

3. Probe (10) according to one of the preceding claims, **characterized in that** the probe (10) comprises indexing means for indexing in the first position (P1) and/or in the second position (P2), notably a slot (26) formed on a first base (25) of the internal cage (20) and collaborating with a rib (36) formed on a second base (35) of the cap (30) or a slot formed on the second base (35) of the cap (30) and collaborating with a rib formed on the first base (25) of the internal cage (20).

4. Probe (10) according to one of the preceding claims, **characterized in that** the probe (10) comprises means of retention in the first position (P1) and in the second position (P2) respectively.

5. Probe (10) according to one of the preceding claims, **characterized in that**, in the first position (P1) or in the second position (P2), at least one of the first orifices (21) faces, or substantially faces, at least one of the second orifices (31).

6. Probe (10) according to one of the preceding claims, **characterized in that**, in the first position (P1), the first and second orifices (21, 31) partially coincide and **in that**, in the second position (P2), the first and second orifices (21, 31) fully coincide.

7. Probe (10) according to one of the preceding claims, **characterized in that** the internal cage (20) comprises third orifices (24), notably distributed over the first circumference (22) of the internal cage (20), so that, in the first position (P1), the first and second orifices (21, 31) at least partially coincide and so that, in the second position (P2), the third and second orifices (24, 31) at least partially coincide.

8. Probe (10) according to one of the preceding claims, **characterized in that** the cap (30) comprises fourth orifices (34), notably distributed over the second circumference (32) of the cap (30), so that, in the first position (P1), the first and second orifices (21, 31) at least partially coincide and so that, in the second position (P2), the first and fourth orifices (21, 34) at least partially coincide.

9. Probe (10) according to one of the preceding claims, **characterized in that** the sensitive element (11) extends along a main axis (A), notably perpendicular or substantially perpendicular to a direction (G) of flow of a gas (2),
the internal cage (20) being of the cylindrical or substantially cylindrical end-cap type having an axis coincident or substantially coincident with the main axis (A),
the cap (30) being of the cylindrical or substantially cylindrical end-cap type having an axis coincident or substantially coincident with the main axis (A),
the first and second circumferences (22, 32) being in the one same plane (P) or substantially in the one same plane (P), the plane (P) being perpendicular or substantially perpendicular to the main axis (A).

10. Probe (10) according to the preceding claim, **characterized in that** the first orifices (21) are distributed uniformly or substantially uniformly over the first circumference (22) and/or third orifices (24) are distributed uniformly or substantially uniformly over the first circumference (22), the second orifices (31) being distributed uniformly or substantially uniformly over the second circumference (32) and/or fourth orifices (34) are distributed uniformly or substantially uniformly over the second circumference (32).

11. Probe (10) according to one of the preceding claims, **characterized in that** the internal cage (20) comprises a first axial orifice (27) and/or the cap (30) comprises a second axial orifice (37) at a distal end (12) of the sensitive element (11).

12. Device (40) for measuring the properties of a gas (2), notably an exhaust gas (2) or an intake mixture admitted to an internal combustion engine (1), **characterized in that** the device (40) comprises a probe (10) according to one of Claims 1 to 11, electronic means (14) interpreting the measurements from the probe (10) and a means (13) of transmitting information between the probe (10) and the electronic means (14).

13. Internal combustion engine (1), notably an internal combustion engine (1) of a motor vehicle (3), **characterized in that** it comprises a probe (10) according to one of Claims 1 to 11, notably within and/or at a duct (4) of an exhaust circuit or of an intake circuit, and/or a device (40) according to the preceding claim.

14. Motor vehicle (3), **characterized in that** it comprises an internal combustion engine (1) according to the preceding claim or a device (40) for measuring the properties of a gas (2) according to Claim 12 or a probe (10) according to one of Claims 1 to 11.
